Europäisches Patentamt

European Patent Office

Office européen des brevets

(19)

(11) Veröffentlichungsnummer: **0 224 638**
**A2**

## (12) EUROPÄISCHE PATENTANMELDUNG

(21) Anmeldenummer: **86108289.9**

(22) Anmeldetag: **18.06.86**

(51) Int. Cl.⁴: **E 02 D 31/00**
**B 09 B 1/00**

(30) Priorität: **05.12.85 DE 3542988**

(43) Veröffentlichungstag der Anmeldung:
**10.06.87 Patentblatt 87/24**

(84) Benannte Vertragsstaaten:
**AT BE CH DE FR GB IT LI NL SE**

(71) Anmelder: **Niederberg-Chemie GmbH
Postfach 11 63
D-4133 Neukirchen-Vluyn(DE)**

(72) Erfinder: **Schlütter, Aloys
Rheinstrasse 42
D-4152 Kempen 3(DE)**

(54) **Abdichtung für kontaminierte Bereiche, insbesondere Deponien.**

(57) Nach der Erfindung werden für die Abdichtung von Deponien flexible Wärmetauscherelemente als Dichtungsbahnen verwendet. Diese Wärmetauscherelemente besitzen Kanäle, die im Falle einer Leckage durch Sickerwasseraustritt den Schaden anzeigen und es ermöglichen, durch Verpressen eines Dichtungsmittels den Schaden zu beseitigen.

FIG. 2

EP 0 224 638 A2

Abdichtung für kontaminierte Bereiche, insbesondere Deponien

Die Erfindung betrifft eine Abdichtung für kontaminierte Bereiche, insbesondere Deponien, mit einer Voranlegung der Deponie zu verlegenden Abdichtungsbahn oder einer nachträglich unter der Deponie einzuziehenden Abdichtungsbahn. Bei der Errichtung von Deponien sind zum Schutz des Untergrundes, des Grundwassers und ggf. auch von oberirdischen Gewässern häufig besondere Dichtungsmaßnahmen an der Sohle und den Böschungen der Deponie in Form eines Dichtungssystems notwendig. In den in Deponien abgelagerten Abfällen sind Stoffe enthalten, die unmittelbar wasserlöslich sind und solche, die infolge chemischer Abbauprozesse erst entstehen und dann in Lösung gehen. Das Wasser, welches für Lösungsvorgänge in abgelagerten Abfällen zur Verfügung steht, stammt fast ausschließlich aus Niederschlägen, die in den Deponiekörper eingesickert sind. Diese Sickerwässer sollen vorzugsweise an der Sohle der Deponie gesammelt und aufbereitet werden. Dazu ist eine Abdichtung der Sohle erforderlich. Als Abdichtung dienen vorzugsweise Dichtungsbahnen. Die Dichtungsbahnen können mit anderen Dichtungselementen und Draenschichten kombiniert werden.

Für die Dichtungsbahnen sind bisher Äthylencopolymerisat-Bitumen, chloriertes Polyäthylen, Polyäthylen hoher Dichte, Polyäthylen niedriger Dichte, Polyvinilchlorid weich und Bitumen als Materialien verwendet worden.

Beim Verlegen sind die Dichtungsbahnen grundsätzlich auf ihre Dichtigkeit zu prüfen. Das ist für die Fügenähte der auf einzelnen Abschnitten zusammengesetzten Dichtungsbahnen von besonderer Wichtigkeit, da hier im Vergleich zu herstellungsbedingten Undichtigkeiten an Abdichtungsbahnen relativ häufig Fehler vorkommen.

Nach Verlegung der Dichtungsbahn stellt sich beim Aufbau der Deponie das Problem der Bodensetzungen. Bei Hallen, auf nachgiebigem Untergrund angelegten Deponien stellt sich mit zunehmenden Aufbau der Deponie

...

- 2 -

eine Bodensetzung ein. Infolge dieser Bodensetzung können scharfkantige und spitze Gegenstände auch dann Berührung mit der Abdichtungsbahn erlangen, wenn vorher eine Schutzschicht aufgebracht
worden ist. Daraus können Leckagen entstehen, die nach Lage die
Deponieabdichtung ganz oder teilweise unwirksam machen.

Der Erfindung liegt daher die Aufgabe zugrunde, an Abdichtungsbahnen,
die vor Gründung der Deponien verlegt worden sind oder nachträglich
unterhalb von Deponien bzw. als Vertikalabdichtung seitlich von
Deponien eingezogen werden, nachträglich auftretende Leckagen festzustellen.

Nach der Erfindung wird das dadurch erreicht, daß als Abdichtungsbahnen flexible Elemente verwendet werden, wie sie bei Wärmetauschern
für Wärmepumpenanlagen üblich sind. Derartige Elemente kommen in der
Form von mehrlagigen Bahnen vor, deren beide Lagen durch Stege im
Abstand voneinander gehalten werden, die ihrerseits im Abstand voneinander angeordnet sind. Infolgedessen besitzen diese Elemente über
ihre gesamte Fläche verteilt Kanäle, die in der bekannten Anwendung
als Wärmetauscher mit Wasser gefüllt sind. Bei der erfindungsgemäßen
Verwendung dieser Elemente ist vorgesehen, daß die Kanäle leer
bleiben. Sobald infolge einer Beschädigung der Abdichtungsbahn Sickerwasser in die Abdichtungsbahn dringt, fließt das Sickerwasser durch
die Kanäle bis an den seitlichen Rand der Deponieabdichtung und
wird dort sichtbar. Die Kanäle können dann genutzt werden, um gezielt ein Dichtungsmittel, z.B. einen härtenden Kunststoff bis zur
Leckstelle zu pressen und die Leckstelle damit zu verschließen.

In der Zeichnung ist ein Ausführungsbeispiel der Erfindung dargestellt.

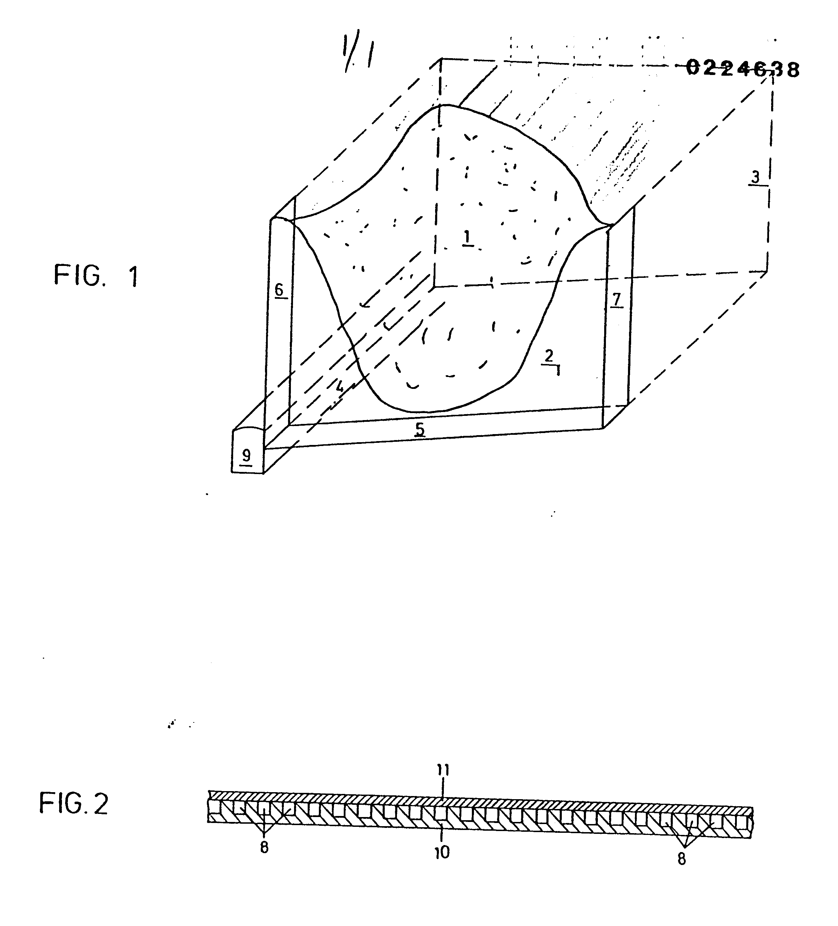

Figur 1 zeigt eine mit erfindungsgemäßen Abdichtungsbahnen eingegrenzte Deponie, Figur 2 einen Querschnitt durch die erfindungsgemäße

...

Abdichtungsbahn.

Nach Figur 1 ist eine Deponie 1 mit einer Horizontalabdichtung 2 und einer Vertikalabdichtung 3 versehen. Die Horizontalabdichtung 2 ist geneigt angelegt, um anfallendes Sickerwasser an der Stelle 4 zu einem nicht dargestellten Sammler zu leiten. Die Vertikalabdichtung umgibt die Deponien 1 an allen vier Seiten. Sie bildet mit der Horizontalabdichtung 2 eine geschlossene Mulde.

Sowohl die Vertikalabdichtung 3 als auch die Horizontalabdichtung ist aus einzelnen Abdichtungsbahnen zusammengesetzt, die in Figur 1 schematisch dargestellt und mit 5, 6 und 7 bezeichnet sind. Diese Abdichtungsbahnen sind miteinander verschweißt.

Figur 2 zeigt, daß die Abdichtungsbahnen in Längsrichtung Kanäle 8 aufweisen. Im Falle einer Verletzung der Abdichtungsbahnen dringt Sickerwasser in die Kanäle 8 und fließt dort zum Rand der Horizontalabdichtung 2 bzw. zum unteren Ende der Vertikalabdichtung 3. An diesen Stellen sind begehbare Tunnel vorgesehen. Von diesen ist einer in Figur 1 dargestellt und mit 9 bezeichnet. An den in die Tunnel hineingeführten Enden der Abdichtungsbahnen kann der Wasseraustritt durch Augenschein leicht festgestellt werden. Das ist gleichbedeutend mit einer Schadensfeststellung an der Abdichtungsbahn. Die den Wasseraustritt verursachende Leckage kann dann mit einer gezielten Injektion eines Abdichtungsmittels durch die Kanäle 8 beseitigt werden. Dazu wird so lange Injektionsmittel in den bzw. die Sickerwasser führenden Kanäle 8 eingepreßt, bis das Injektionsmittel am gegenüberliegenden Ende der Abdichtungsbahn wieder austritt.

Die Abdichtungsbahnen nach Figur 1 und 2 werden dadurch hergestellt, daß zunächst eine profilierte Bahn aus Kunststoff, insbesondere Äthylencopolymerisat-Bitumen extrudiert wird. Diese Bahn ist an der Unterseite glatt und besitzt an der Oberseite die Stege 8 als Profil. Die so entstandene Bahn wird mit einer glatten Abdichtungs-

...

- 4 -

bahn verschweißt. Das kann mit dem Herstellungsvorgang der profilierten Bahn verknüpft werden. D.h., die Verschweißung erfolgt im noch plastischen Zustand der profilierten Bahn. Das geschieht durch Auflegen und Andrücken der glatten Bahn.

Patentansprüche

1. Abdichtung für kontaminierte Bereiche, insbesondere Deponien, mit einer vor Anlegung der Deponien zu verlegenden Abdichtungsbahn oder einer nachträglich unter der Deponie einzuziehenden Abdichtungsbahn, g e k e n n z e i c h n e t durch die Verwendung von flexiblen Wärmetauscherelementen als Dichtungsbahnen.

2. Abdichtung nach Anspruch 1, g e k e n n z e i c h n e t durch zweilagige Bahnen, deren beide Lagen (10, 11) durch Stege (8) im Abstand voneinander gehalten sind, die ihrerseits einen Abstand voneinander aufweisen.

3. Abdichtung nach Anspruch 1 und 2, d a d u r c h g e k e n n - z e i c h n e t, daß die Bahnen in begehbare Tunnel (9) münden.

FIG. 1

FIG. 2